# FASCICULE DE BREVET EUROPEEN

(11) **EP 1 397 047 B1**
(45) Date de publication et mention de la délivrance du brevet: **15.12.2004**
(21) Numéro de dépôt: 02745537.7
(22) Date de dépôt: 19.06.2002
(51) Int. Cl.: A22C 7/00

(54) **DISPOSITIFS DE FORMAGE DE PORTIONS DE VIANDE HACHEE TELS QUE STEAKS, BOULETTES, ETC.**
VORRICHTUNGEN ZUR HERSTELLUNG VON HACKFLEISCHPORTIONEN WIE STEAKS, KLÖSSEN USW
ARRANGEMENTS FOR MOULDING PORTIONS OF MINCED MEAT SUCH AS STEAKS, MEATBALLS ETC.

(30) Priorité: 22.06.2001 FR 0108238; 25.02.2002 FR 0202334
(43) Date de publication de la demande: 17.03.2004
(73) Titulaire: NIJAL (S,A), F-56150 Baud (FR)
(72) Inventeur: LE PAIH, Jacques, F-56930 Plumeliau (FR)
(74) Mandataire: Bentz, Jean-Paul
(86) Numéro de dépôt international: PCT/FR2002/002105
(87) Numéro de publication internationale: WO 2003/001918

(56) Documents cités:
- EP-A- 0 528 575
- FR-A- 2 718 612
- US-A- 2 275 780
- US-A- 2 542 673
- US-A- 2 580 008
- US-A- 2 657 423
- US-A- 4 257 145
- US-A- 4 886 441

## Description

La présente invention concerne des dispositifs de formage de portions de viande hachée pouvant avoir des formes diverses, s'agissant par exemple de pavés, steaks hachés traditionnels, boulettes, etc.

A l'heure actuelle, les produits de ce type qui sont fabriqués industriellement sont essentiellement les steaks hachés. Dans le processus de fabrication, la viande sortant du hachoir est stockée dans une trémie, et elle est reprise au fond de celle-ci pour être introduite en pression dans une chambre dont la base est un tiroir de formage. Du fait que la pression nécessaire au formage est forcément importante, les contraintes qui s'exercent sur la viande de façon anarchique sont très préjudiciables à la structure interne de celle-ci. Il en résulte des pavés compacts de texture plus ou moins granuleuse et qui sont secs du fait de libérer beaucoup d'exsudats.

Ces produits sont donc d'une qualité médiocre, comparés aux steaks hachés préparés de façon traditionnelle, où la viande sortie de la grille du hachoir en fils dits "cheveux d'ange" n'a subi qu'un simple compactage qui n'a pas détruit cette structure filaire, si bien qu'elle conserve une texture relativement légère et moelleuse, ainsi qu'un maximum de saveur.

L'invention a été réalisée en vue d'une production industrielle de steaks hachés de qualité comparable à celle des steaks hachés préparés traditionnellement.

L'invention a été réalisée également en vue de la production industrielle de portions de viande hachée de formes différentes de celle des steaks hachés, telles des boulettes de viande hachée par exemple.

Un autre but recherché dans le cadre de l'invention a été de permettre la production de portions de viande hachée de formes diverses avec une même machine ne nécessitant que des modifications de mise en oeuvre pratique et rapide pour passer d'une forme à une autre.

L'invention consiste en un dispositif de fabrication de portions de viande hachée mises en forme, telles que steaks ou boulettes, caractérisé en ce qu'il comprend :
un hachoir débitant une veine de viande hachée, laquelle veine de viande hachée a une grosseur déterminée en fonction des portions à réaliser ;
des moyens de convoyage à bande sans fin pour transporter ladite veine de viande hachée en sortie dudit hachoir ;
et le long desdits moyens de convoyage :
   des moyens pour découper ladite veine de viande hachée en portions ; et
   des moyens de formage latéraux agissant simultanément de chaque côté de ladite veine de viande hachée pour former le contour desdites portions.

Pour l'application au formage de portions de type steak haché, le dispositif comporte en outre des moyens de formage verticaux coopérant avec lesdits moyens de formage latéraux pour conférer aux portions l'épaisseur souhaitée.

La veine de viande hachée étant formée légèrement plus large et plus épaisse que les produits finaux, le formage ne met en jeu que des contraintes qui s'exercent toutes sensiblement perpendiculairement à l'orientation des fils de viande produits en sortie du hachoir. Il en résulte que le formage n'a essentiellement qu'un effet de tassement modéré plutôt que d'écrasement, qui ne casse pas la structure filaire de la viande, et qui s'apparente donc au plus près du formage traditionnel pour en avoir tous les avantages.

Lesdits moyens de découpe en portions de ladite veine de viande hachée peuvent être prévus en amont desdits moyens de formage, consistant par exemple en un passage pour ladite veine de viande hachée formé de deux bandes sans fin à tasseaux transversaux superposées, qui se rapprochent verticalement d'amont en aval, de telle manière que lesdits tasseaux se resserrent deux à deux progressivement sur ladite veine de viande hachée en la pinçant jusqu'à la sectionner. Dans une forme de réalisation préférée de l'invention, la découpe en portions de ladite veine est assurée en même temps que le formage.

Selon l'invention, lesdits moyens de formage latéraux peuvent être des blocs échancrés ou évidés défilant symétriquement de chaque côté et immédiatement au-dessus d'une bande transporteuse de formage faisant partie desdits moyens de convoyage de ladite veine de viande hachée, qui d'amont en aval se rapprochent jusqu'à se toucher pour former par leurs échancrures ou évidements et avec ladite bande transporteuse de formage des alvéoles de formage. Si le dispositif comporte également lesdits moyens de formage verticaux, ceux-ci peuvent alors être des poussoirs venant au-dessus de ladite bande transporteuse de formage, entre lesdits blocs de formage latéraux, et qui défilent de façon synchrone avec eux.

Dans une forme de réalisation de l'invention, lesdits blocs de formage latéraux sont montés sur des premier et second arrangements en boucle sans fin disposés horizontalement et symétriquement de chaque côté de ladite bande transporteuse de formage et défilant de façon synchrone avec elle. Si des poussoirs sont prévus pour coopérer avec lesdits blocs de formage latéraux, ils peuvent alors être montés sur un troisième arrangement en boucle sans fin disposé au-dessus de ladite bande transporteuse de formage et entre lesdits premier et second arrangements en boucle sans fin, et défilant de façon synchrone avec eux.

Dans une variante de réalisation, lesdits blocs de formage latéraux, avec éventuellement lesdits poussoirs, sont montés dans un même arrangement en boucle sans fin disposé au-dessus de ladite bande transporteuse de formage, lequel arrangement en boucle sans fin comporte deux mêmes chaînes sans fin latérales en parallèle portant des glissières transversales sur lesquelles sont montés coulissants lesdits blocs de formage latéraux. Dans cette variante, lesdits blocs de formage latéraux peuvent présenter une échancrure ou évidement central pour coopérer deux à deux, mais dans une forme de réalisation préférée, ils présentent chacun deux échancrures ou évidements de chaque côté d'une partie de séparation centrale, de telle manière que les alvéoles de formage se forment chacune entre deux paires consécutives de blocs de formage latéraux en regard, ladite veine de viande hachée pouvant alors être sectionnée en portions lors du formage, par les glissières de coulissement desdits blocs de formage latéraux.

Selon une autre caractéristique de l'invention, lesdits poussoirs constituant les moyens de formage verticaux ont avantageusement un supplément de course pour évacuer positivement les portions après formage.

Ces caractéristiques et avantages de l'invention, ainsi que d'autres, apparaîtront plus clairement dans la description suivante et les dessins joints, dans lesquels :
la Fig. 1 est une vue schématique de côté d'une première forme de réalisation d'un dispositif selon l'invention pour la fabrication de steaks hachés ;
la Fig. 2 est une vue schématique en plan d'une partie du dispositif de la Fig. 1 ;
la Fig. 3 est une vue schématique de côté d'une seconde forme de réalisation de dispositif selon l'invention pour la fabrication de steaks hachés ;
la Fig. 4 est une vue schématique en plan représentant partiellement le dispositif de la Fig. 3 ;
la Fig. 5 est une vue schématique de côté d'une autre forme de réalisation préférée de dispositif selon l'invention pour la fabrication de steaks hachés ;
la Fig. 6 est une vue schématique de côté représentant à échelle agrandie une partie essentielle du dispositif de la Fig. 5 ;
la Fig. 7 est une vue schématique partielle et de dessus de la partie du dispositif représentée à la Fig. 6 ;
la Fig. 8 est une vue schématique en perspective, à échelle agrandie, représentant partiellement et plus en détail la partie des Figs. 6 et 7, à savoir un ensemble de formage ;
les Figs. 9a à 9d sont des vues schématiques illustrant les différents mouvements des poussoirs dans le dispositif un Fig. 5 à 8 ;
la Fig. 10 est une vue schématique en perspective, dans une position de fonctionnement, d'un ensemble de formage similaire à celui de la Fig. 8, mais destiné à la fabrication de boulettes de viande hachée ; et
les Figs. 11 et 12 sont deux autres vues schématiques en perspective du même ensemble de formage qu'à la Fig. 8, respectivement dans deux autres positions de fonctionnement.

Les dispositifs selon l'invention sont destinés à être placés en alignement à la suite d'un hachoir, non représenté, produisant une veine de viande hachée V de grosseur prédéterminée et ayant une structure filaire créée par la grille de sortie. Dans toutes les formes de réalisation, ils comportent des moyens de transport T de la veine de viande V qui la font avancer à mesure de son débit et qui consistent en une succession de bandes sans fin dont une, repérée 11, sur laquelle est réalisé le formage de portions P qui, en aval, sont chargées par simple gravité dans des barquettes de conditionnement B défilant sur un convoyeur inférieur 13.

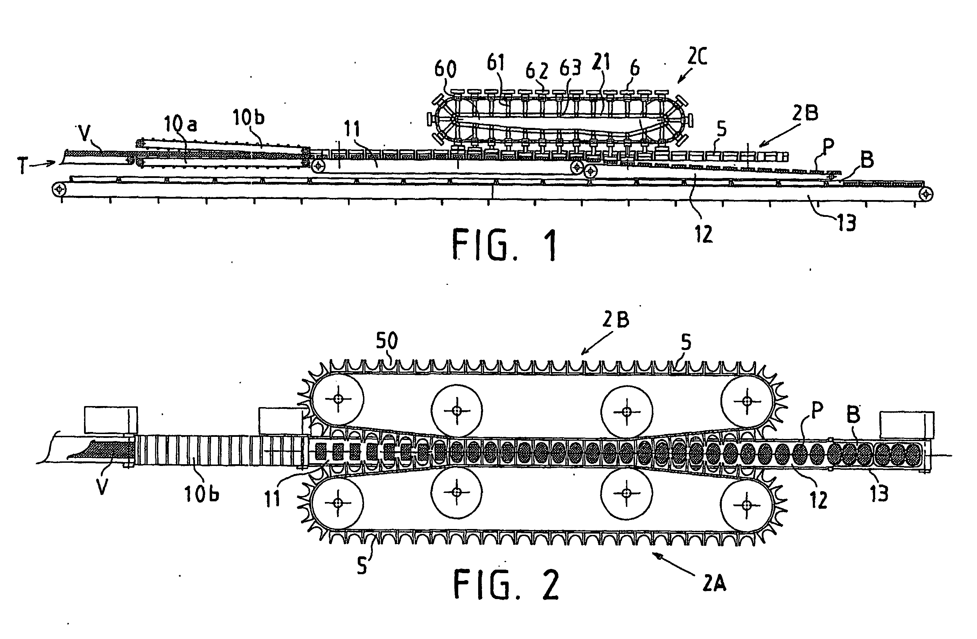

Dans les deux premières formes de réalisation des Figs. 1 et 2, et des Figs. 3 et 4, respectivement, les moyens de transport de la veine de viande V comprennent en amont de la bande transporteuse de formage 11, une section de découpe en portions P, qui consiste en deux bandes sans fin à tasseaux transversaux 10a et 10b, lesquelles sont superposées pour définir entre elles un passage se rétrécissant verticalement d'amont en aval, et sont synchronisées de telle sorte que lesdits tasseaux défilent en regard deux à deux pour se resserrer progressivement sur la veine V en la pinçant jusqu'à la sectionner.

Par différence entre les vitesses de défilement des bandes sans fin à tasseaux 10a, 10b et de la bande transporteuse de formage 11, un pas d'écartement déterminé est créé entre les portions P.

Les moyens de formage associés à la bande 11 dans le dispositif des Figs. 1 et 2 comprennent des blocs de formage latéraux 5 qui défilent symétriquement en glissant de chaque côté sur la bande 11. Les blocs 5 sont en matière telle que polyéthylène de haute densité (PEHD) qui sont montés adjacents à la suite les uns des autres dans deux mêmes arrangements en boucle sans fin 2A et 2B disposés horizontalement (c'est-à-dire avec les axes de leurs moyens de renvoi verticaux) de part et d'autre de la bande transporteuse de formage 11 avec laquelle ils défilent en parfait synchronisme. Les blocs 5 présentent des profondes échancrures 50 orientées vers l'extérieur dans leur arrangement en boucle sans fin respectif, qui en venant coïncider en regard deux à deux sur la bande 11 définissent avec elle des alvéoles de formage. Celles-ci sont fermées sur une certaine longueur dans la partie médiane des arrangements 2A et 2B, où leurs brins en regard défilent longitudinalement et parallèlement, après avoir convergé à partir des moyens de renvoi amont et avant de diverger jusqu'aux moyens de renvoi aval. D'amont en aval, les blocs de formage latéraux 5 défilant en regard l'un de l'autre se rapprochent progressivement d'une portion P pour l'enfermer dans l'alvéole qu'ils vont former, puis ils s'écartent à nouveau.

Avec les blocs de formage latéraux 5, coopèrent des poussoirs 6, représentés uniquement à la Fig. 1, qui viennent fermer supérieurement lesdites alvéoles lorsqu'elles se forment, puis qui descendent en deux temps dans celles-ci, d'abord pour y effectuer le compactage désiré des portions P, ensuite pour les transférer positivement à un niveau inférieur sur une bande transporteuse 12 faisant suite à la bande transporteuse de formage 11, et qui assure leur chargement dans les barquettes de conditionnement B.

Les poussoirs 6 sont montés dans un arrangement en boucle sans fin 2C disposé verticalement (c'est-à-dire avec ses renvois axés horizontalement) au-dessus de la bande transporteuse de formage 11 et entre les arrangements en boucle sans fin 2A et 2B, et synchronisé avec eux. Ils comportent une plaque de poussée 62 en bout d'une tige 61 coulissant dans un corps de base 60 monté solidaire de la boucle sans fin. Les déplacements en coulissement de la tige 61 sont commandés par une came pour des galets 63 en extrémité de celle-ci, laquelle came consiste en un chemin de guidage 21 suivant intérieurement la boucle de défilement.

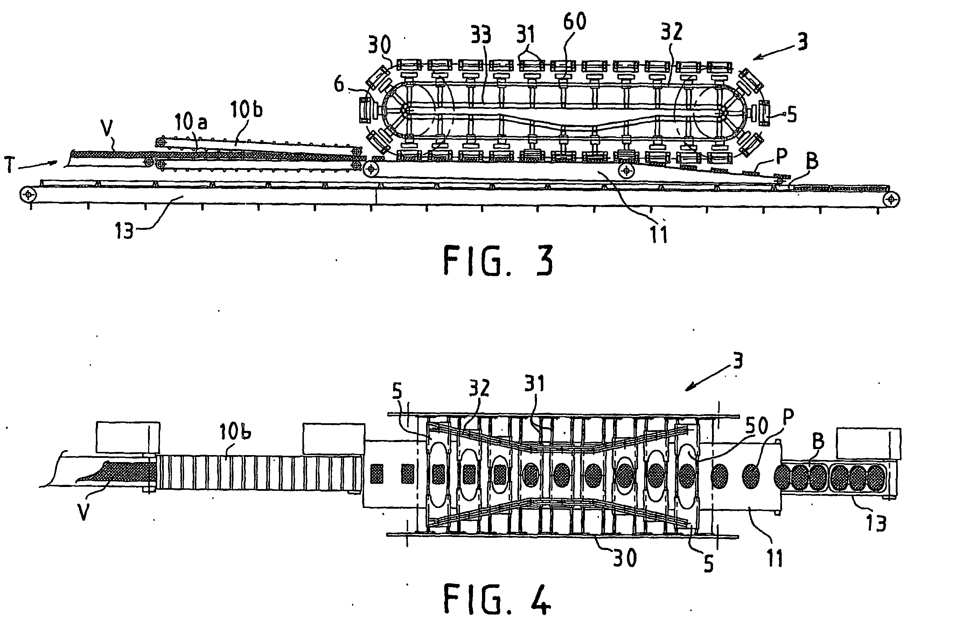

Le dispositif des Figs. 3 et 4 diffère de celui qui vient d'être décrit essentiellement dans l'agencement de ses moyens, mais il fonctionne de la même façon. Ici, les blocs de formage latéraux 5 et les poussoirs 6 sont montés dans un même arrangement en boucle sans fin 3 disposé verticalement (c'est-à-dire avec ses moyens de renvoi axés horizontalement) au-dessus de la bande transporteuse de formage 11. L'arrangement en boucle sans fin 3 comprend deux mêmes chaînes sans fin latérales en parallèle 30, qui portent des doubles glissières transversales 31 sur lesquelles coulissent en regard deux à deux les blocs de formage latéraux 5, commandés en déplacement par des rails latéraux 32, comme l'illustre schématiquement la Fig. 4. Les poussoirs 6 ont quant à eux leur corps de base 60 monté sur des supports fixés aux glissières, 31 et qui, pour la compréhension des dessins n'ont pas été représentés aux Figs. 3 et 4. Les poussoirs 6 sont commandés comme dans l'exemple précédent par un chemin de guidage 33 suivant intérieurement leur boucle de défilement.

Dans ce second exemple, les poussoirs 6 ont une fonction limitée au formage des portions P. Suite au formage, les alvéoles s'ouvrent et libèrent les portions P qui demeurent en place sur la bande transporteuse de formage 11, laquelle les achemine elle-même jusqu'aux barquettes de conditionnement B.

Les deux formes de réalisation sus décrites, dans leur principe et leur fonctionnement, sont utilisables pour conformer autrement que sous forme de steak, par exemple en boulettes, les portions de viande P. Il suffit pour cela de remplacer les blocs latéraux 5 par d'autres blocs dans lesquels sont prévus, au lieu des échancrures 7, des évidements qui, lors du rapprochement de deux blocs en vis-à-vis, forment une alvéole complètement fermée au-dessus de la bande transporteuse 11. Les poussoirs 6 ne sont alors plus d'aucune utilité pour le formage, et donc superflus.

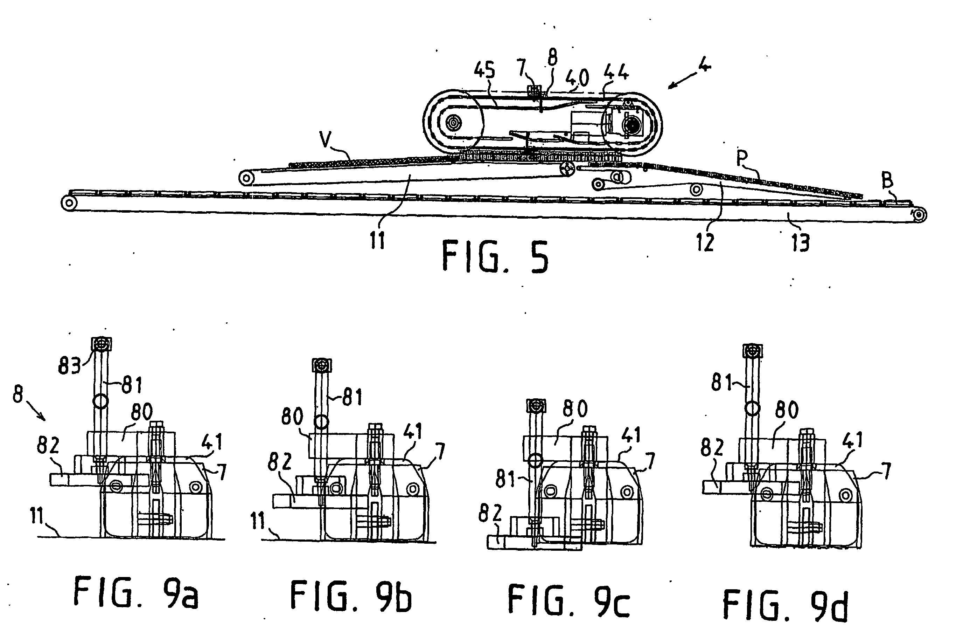

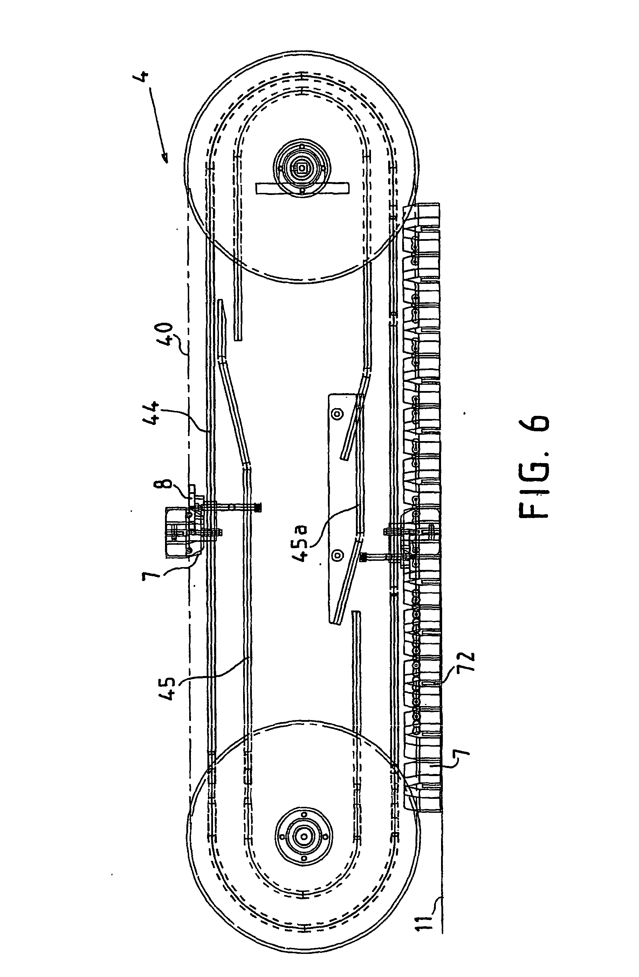

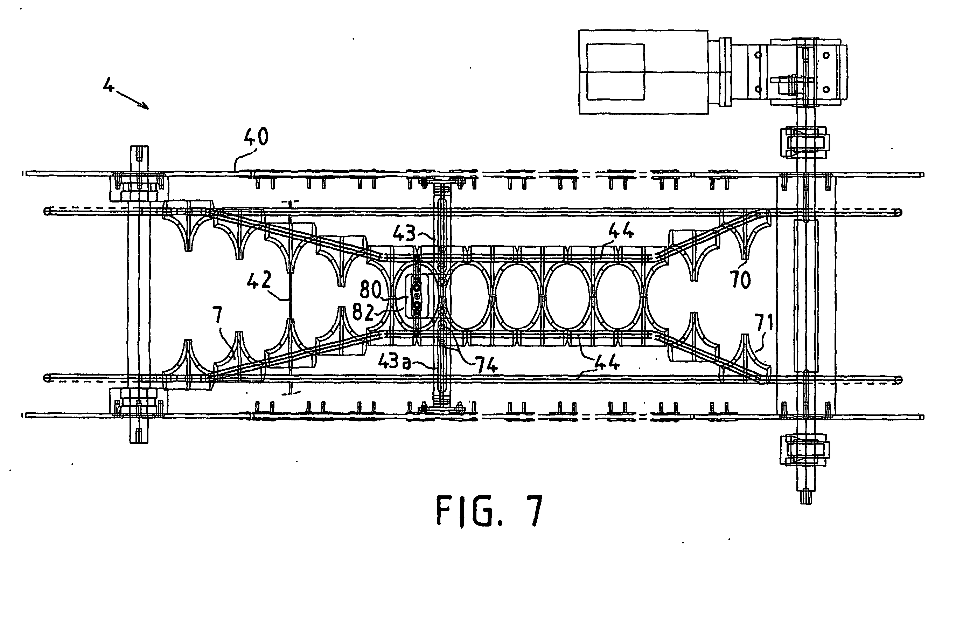

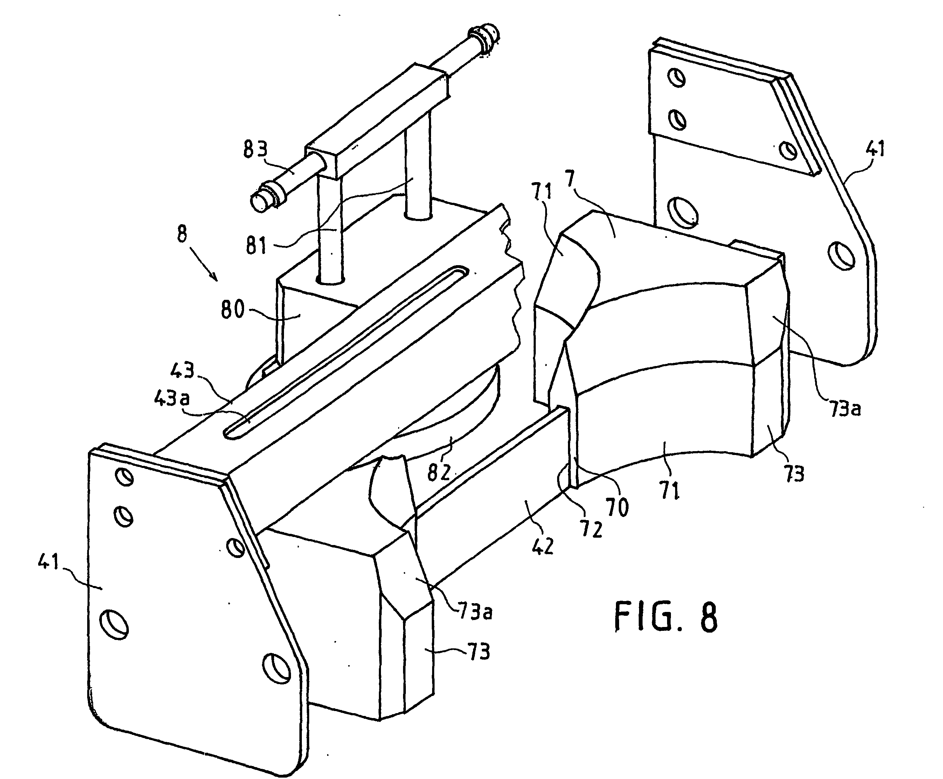

Dans la forme de réalisation préférée de dispositif selon l'invention représentée aux Figs. 5 à 9, la découpe de la veine de viande hachée V en portions P est assurée en même temps et par les mêmes moyens que le formage. Comme dans l'exemple précédent des Figs. 3 et 4, ce dispositif comprend un unique arrangement en boucle sans fin 4, monté de même au-dessus de la bande transporteuse de formage 11.

L'arrangement 4 comprend deux mêmes chaînes 40 disposées en parallèle, sur les maillons desquelles sont fixés adjacents à la suite les uns des autres des flasques 41, Fig. 8. Les flasques 41 portent deux à deux un ensemble de formage comprenant une glissière transversale 42 et, au-dessus de celle-ci, une poutre de support transversale 43. De préférence, et comme représenté à la Fig. 8, les glissières 42 sont des barres plates disposées selon leur largeur perpendiculairement aux chaînes 40, et qui peuvent être insérées et bloquées dans des fentes de fixation ouvertes à l'opposé de la poutre 43 pour permettre un montage/démontage rapide.

Les blocs de formage latéraux 7 ont ici la particularité d'être montés coulissants à cheval, en regard deux à deux, sur une glissière 42, par une fente 72 dans leur paroi inférieure, et d'être symétriques par rapport au plan de celle-ci. Ils présentent une pointe médiane 70 dirigée vers l'intérieur, et bordée de chaque côté par deux mêmes échancrures 71, de telle manière qu'une alvéole de formage sera formée non plus par deux mais par quatre blocs de formage, c'est-à-dire deux paires successives de blocs 7 en regard l'un de l'autre. Chaque bloc 7 et ses voisins immédiats de même côté sont jointifs pour la formation des alvéoles par des pans verticaux avant et arrière 73 prolongeant leurs échancrures 71 vers l'extérieur, les pans 73 s'inclinant vers le haut en 73a à partir d'une certaine hauteur pour permettre le passage autour des renvois d'extrémité. Comme dans les exemples précédents, les déplacements transversaux des blocs 7 sont commandés par des rails de guidage 44, qu'enserrent des paires de doigts 74 des blocs 7 traversant une fente de passage 43a ménagée dans les poutres 43, Fig. 7. Les blocs 7 sont maintenus en place sur leur glissière respective 42 par la poutre 43. Leur base coïncide avec le bord inférieur des glissières 42, de sorte que celles-ci viennent à fleur sur la bande transporteuse de formage 11 et procèdent à la découpe en portions de la veine de viande hachée V.

Outre assurer le maintien des blocs 7 à cheval sur leur glissière 42, les poutres 43 servent au support des poussoirs 8 qui ont leur corps de base 80 monté en console sur l'avant ou l'arrière de celles-ci. Comme dans les exemples précédents, les poussoirs 8 comportent des plaques de poussée 82 en bout de tiges 81 coulissant dans les corps de base 80, et dont les extrémités distales portent par l'intermédiaire d'un axe transversal 83 des galets, non représentés, coopérant avec un chemin de guidage 45 pour commander les déplacements. A noter qu'aux Figs. 5 et 6, le tronçon 45a du chemin de guidage correspondant à la section de formage est représenté réglable, pour permettre de modifier en fonction du besoin la course de pressage des poussoirs 8.

En fonctionnement, lorsque les blocs 7 arrivent au contact de la bande transporteuse de formage 11, ensemble avec leur glissière 42, celle-ci accomplit un sectionnement de la veine de viande V, qui va être parfait par les blocs 7 en regard lorsque leurs pointes 70 vont venir se rejoindre.

Ici, comme dans le premier exemple, les poussoirs 8 assurent après le formage un transfert positif des portions P sur un tapis 12 dont l'entrée est en contrebas de la sortie de la bande de formage 11. Les diverses positions fonctionnelles des poussoirs 8 sont schématiquement représentées aux Figs. 9a à 9c : position relevée à la Fig. 9a, position de fin de pressage à la Fig. 9b, position de fin d'évacuation des portions à la Fig. 9c, et retour à la position relevée à la Fig. 9d.

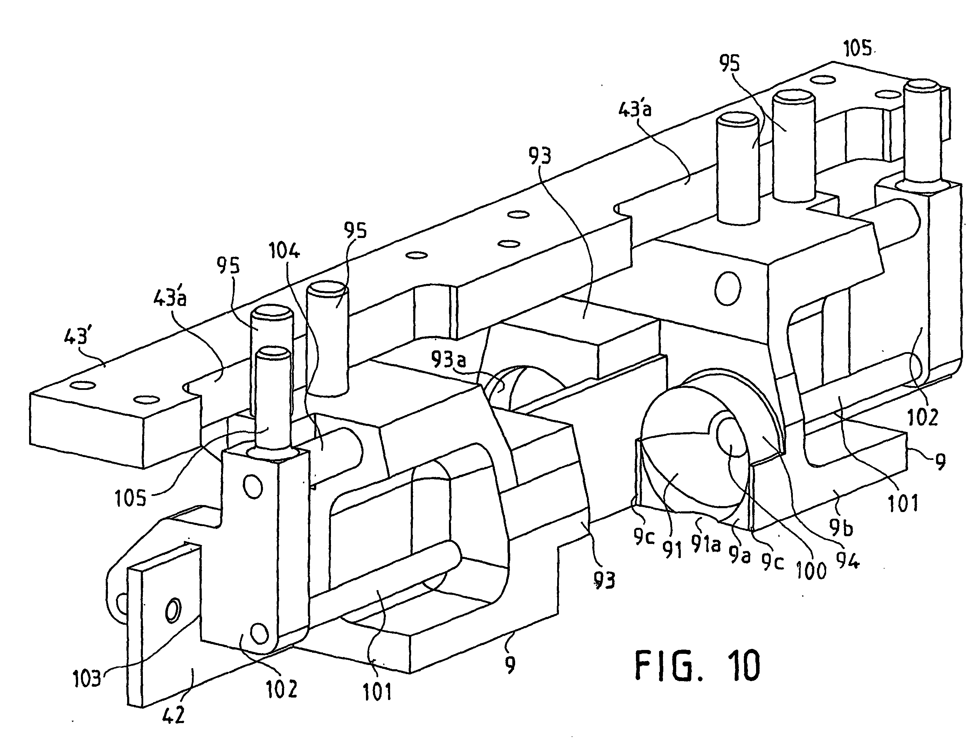

Les Figs. 10 à 12 représentent des ensembles de formage pour un dispositif de même type que celui des Figs. 5 à 9, où la découpe de la veine de viande en portions est également assurée en même temps et par les mêmes moyens que le formage, et où un unique arrangement en boucle sans fin est monté de la même façon au-dessus de la bande transporteuse de formage. Mais au lieu de steaks hachés, ce dispositif sert à fabriquer des boulettes de viande hachée.

Comme dans l'exemple précédent, l'unique arrangement en bande sans fin comprend deux mêmes chaînes en parallèle et des flasques de montage, homologues respectivement des chaînes 40 et des flasques 41 montrés aux Figs. 7 et 8, et agencés de la même façon.

Et une glissière transversale 42' avec, au-dessus de celle-ci, une poutre de support transversale 43', sont portées par chaque paire de flasques en vis-à-vis, exactement de la même façon que représenté à la Fig. 8 pour la glissière 42 et la poutre 43.

Les blocs de formage latéraux 9 sont montés coulissants, à cheval et en regard deux à deux sur chaque glissière 42', par une fente médiane 92 dans leur paroi inférieure plane de glissement sur la bande transporteuse de formage. De part et d'autre de la fente 92, ils sont doubles, autrement dit une boulette sera formée de chaque côté de la glissière 42' insérée dans la fente 92. Pour ce faire, dans leur face 9a tournée vers l'intérieur, et de chaque côté de la fente 92, les blocs 9 présentent un évidement de forme sensiblement hémisphérique 91. On voit que dans la direction de défilement, l'évidement 91 a une dimension ou diamètre tel qu'il arrive au plus près possible du plan de la fente 72 et, à l'opposé, au plus près possible également de la paroi d'extrémité 9b.

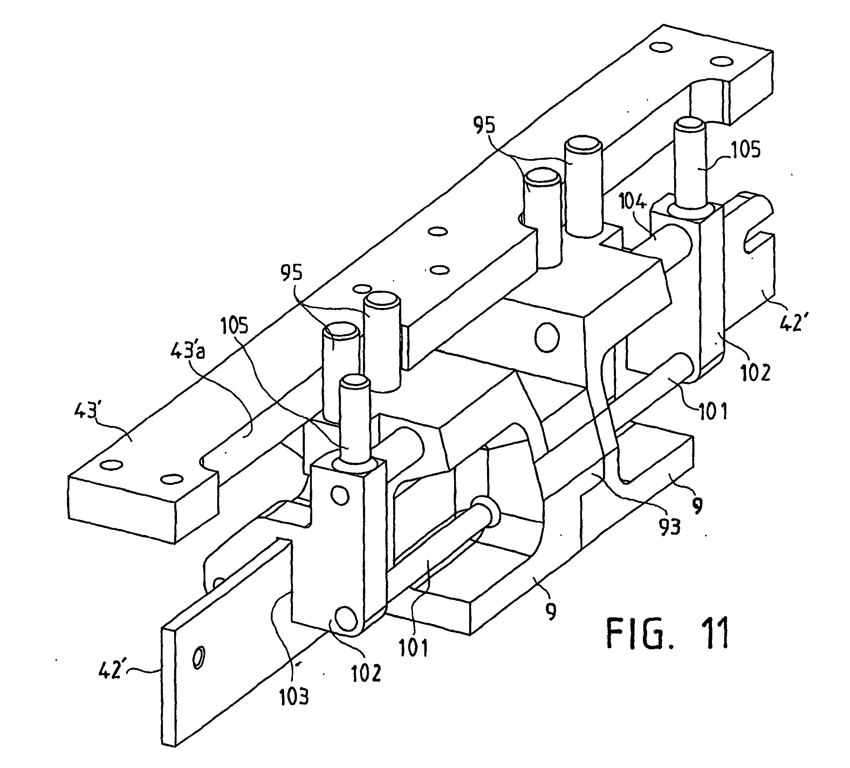

On voit d'autre part sur le dessin que chaque bloc 9 présente en surplomb d'un évidement 91 une partie de recouvrement 93, et au-dessus de son autre évidement, une découpe définissant une surface externe 94 complémentaire de la surface interne 93a de la partie de recouvrement 93 permettant un emboîtement avec contact glissant entre ces deux surfaces lors du rapprochement face à face de deux blocs 9, comme l'illustre la Fig. 11. L'avantage d'une telle conception des blocs 9 avec dans chacun une partie de recouvrement 93 et, de l'autre côté de la fente 92, une partie découpée complémentaire 94, est que la totalité des blocs du dispositif sont strictement identiques.

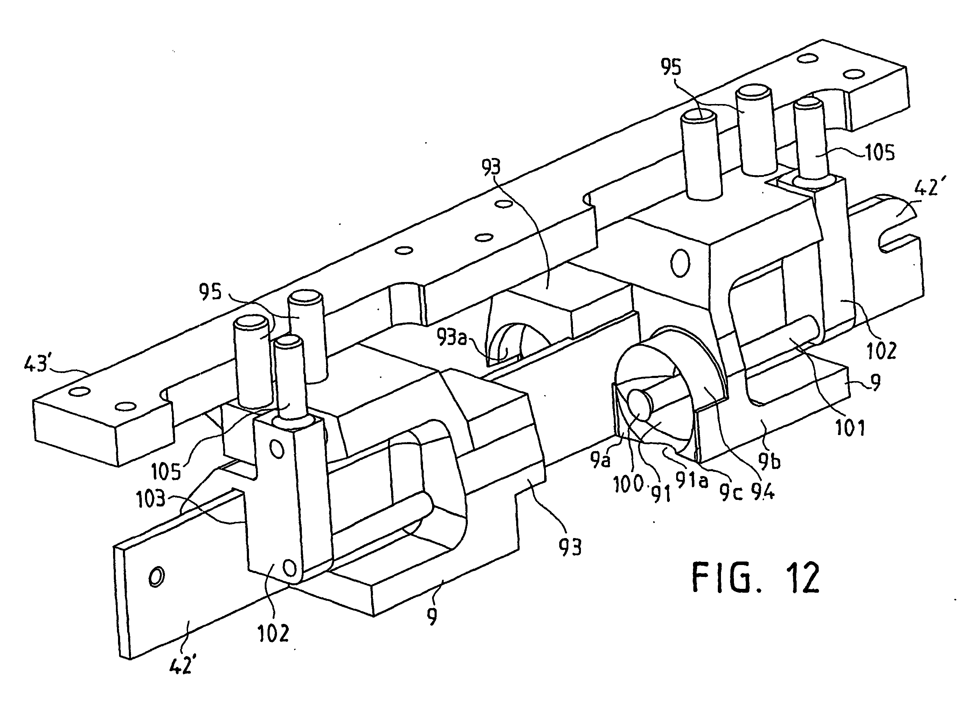

On peut voir aux Figs. 10 et 12 que la face 9a des blocs 9 présente un léger chanfrein de chaque côté de l'évidement 91, ce qui confère du saillant aux arêtes externes avant et arrière 9c au niveau desquels s'établit le contact entre les blocs en vis-à-vis. Il s'ensuit que la moitié inférieure de chaque alvéole formée lorsque deux évidements 91 se rejoignent reste communicante de chaque côté avec un espace interstitiel dans lequel les excès de viande peuvent fluer sans se détacher du corps de la boulette qui sera formée, ce qui réduit le volume des déchets et des encrassements. A noter de plus qu'une légère échancrure 91a est avantageusement formée au niveau du pole inférieur de chaque évidemment 91.

Les blocs 9 comportent supérieurement une paire de doigts 95 participant à leur commande en déplacement transversal sur la glissière 42' en coopérant avec un rail de guidage passant dans l'intervalle qu'ils définissent. Dans l'exemple de réalisation représenté, les doigts 95 glissent le long d'échancrures allongées 43'a pratiquées dans la poutre 43'.

Un autre doigt 105 commande de la même manière le déplacement de coupelles 100 constituant le fond des évidements 91 lorsqu'elles sont dans la position rentrée de la Fig. 10. Les coupelles 100 sont portées en bout de tiges 101 montées coulissantes dans les blocs 9. A l'opposé des coupelles 100, les tiges 101 sont solidaires dans chaque bloc 9 d'un coulisseau commun 102 engagé lui aussi à cheval sur la glissière 42', par une fente 103. Les coulisseaux 102 comportent une seconde tige de guidage 104 engagées dans des alésages prévus à cet effet dans la partie haute des blocs 9.

Les coupelles 100 ont pour fonction de maintenir les boulettes formées en position centrée lors, de l'ouverture des alvéoles, autrement dit lorsque les blocs 9 en vis-à-vis s'écartent en aval de la zone de formage, comme représenté à la Fig. 12.

Comme dans l'exemple précédent, la glissière 42' est avantageusement prévue pour assurer la découpe en portions de la veine de viande, mais ici, il s'agit de portions doubles qui seront transformées en non pas une mais deux boulettes lors du formage. La division en deux des portions est assurée par les pointes formées par les arêtes 9c de blocs adjacents successifs qui sont parfaitement jointifs au-dessus de la bande transporteuse dans la zone de formage.

En comparant les ensembles de formage représentés respectivement à la Fig. 8 et aux Figs. 10 à 12, on voit qu'il serait aisé de les concevoir commodément interchangeables dans un même dispositif.

De ce qui précède, il ressort à l'évidence qu'un tel dispositif peut être adapté à la réalisation de formes tridimensionnelles autres que la forme sphérique, et qui peuvent être plus complexes. L'invention offre d'autre part des possibilités intéressantes pour la constitution même des produits qui peut être définie au stade de la formation de la veine de viande, laquelle est par exemple produite avec un coeur de farce, de garniture ou de sauce.

## Revendications

1. Dispositif de fabrication de portions de viande hachée mises en forme, telles que steaks hachés ou boulettes, **caractérisé en ce qu'**il comprend :
un hachoir débitant une veine de viande hachée (V), laquelle veine de viande hachée a une grosseur déterminée en fonction des portions à réaliser ;
des moyens de convoyage à bande sans fin (T) pour transporter ladite veine de viande hachée (V) en sortie dudit hachoir ;
et le long desdits moyens de convoyage (T) :
des moyens pour découper ladite veine de viande hachée (V) en portions ; et
des moyens de formage latéraux (5, 7, 9) agissant simultanément de chaque côté de ladite veine de viande hachée (V) pour former le contour desdites portions (P).

2. Dispositif selon la revendication 1, **caractérisé en ce que** lesdits moyens de découpe en portions (P) de ladite veine de viande hachée (V) sont prévus en amont desdits moyens de formage.

3. Dispositif selon la revendication 2, **caractérisé en ce que** lesdits moyens de découpe consistent en un passage pour ladite veine de viande hachée (V) formé de deux bandes sans fin à tasseaux transversaux superposées (10a, 10b), qui se rapprochent verticalement d'amont en aval, de telle manière que lesdits tasseaux se resserrent deux à deux progressivement sur ladite veine de viande hachée (V) en la pinçant jusqu'à la sectionner.

4. Dispositif selon l'une des revendications 1 à 3, **caractérisé en ce qu'**il comprend en outre des moyens de formage verticaux (6, 8) coopérant avec lesdits moyens de formage latéraux pour conférer aux portions (P) l'épaisseur souhaitée.

5. Dispositif selon l'une des revendications 1 à 4, **caractérisé en ce que** lesdits moyens de formage latéraux (5 ; 7 ; 9) sont des blocs échancrés ou évidés défilant symétriquement de chaque côté et immédiatement au-dessus d'une bande transporteuse de formage (11) faisant partie desdits moyens de convoyage (T) de ladite veine de viande hachée (V), qui d'amont en aval se rapprochent jusqu'à se toucher pour former par leurs échancrures ou évidements et avec ladite bande transporteuse de formage (11) des alvéoles de formage.

6. Dispositif selon ensemble les revendications 4 et 5, **caractérisé en ce que** lesdits moyens de formage verticaux sont des poussoirs (6; 8) venant au-dessus de ladite bande transporteuse de formage (11), entre lesdits blocs de formage latéraux (5 ; 7), et qui défilent de façon synchrone avec eux.

7. Dispositif selon la revendication 5, **caractérisé en ce que** lesdits blocs de formage latéraux (5) sont montés sur des premier et second arrangements en boucle sans fin (2A, 2B) disposés horizontalement et symétriquement de chaque côté de ladite bande transporteuse de formage (11).

8. Dispositif selon ensemble les revendications 6 et 7, **caractérisé en ce que** les poussoirs (6) coopérant avec lesdits blocs de formage latéraux (5) sont montés sur un troisième arrangement en boucle sans fin (2C) disposé au-dessus de ladite bande transporteuse de formage (11) et entre lesdits premier et second arrangements en boucle sans fin (2A, 2B), et défilant de façon synchrone avec eux.

9. Dispositif selon la revendication 5, **caractérisé en ce que** lesdits blocs de formage latéraux (5 ; 7 ; 9) sont montés dans un même arrangement en boucle sans fin (3) disposé au-dessus de ladite bande transporteuse de formage (11), lequel arrangement en boucle sans fin (3) comporte deux mêmes chaînes sans fin latérales en parallèle (30) portant des glissières transversales (31 ; 42; 42') sur lesquelles sont montés coulissants lesdits blocs de formage latéraux (5 ; 7; 9).

10. Dispositif selon ensemble les revendications 6 et 9, **caractérisé en ce que** lesdits poussoirs (6 ; 8) sont également montés dans le même arrangement en boucle sans fin (3) que lesdits blocs de formage latéraux (5 ; 7).

11. Dispositif selon la revendication 9 ou 10, **caractérisé en ce que** lesdits blocs de formage latéraux (7 ; 9) comportent dans leur paroi inférieure une fente (72 ; 92) par laquelle ils sont montés coulissants sur leur glissière respective (42; 42'), celle-ci étant une barre plate et procédant à la découpe en portions (P) de ladite veine de viande hachée (V).

12. Dispositif selon la revendication 11, **caractérisé en ce que** lesdits blocs de formage latéraux (7) présentent chacun deux échancrures (71) de chaque côté d'une pointe centrale (70), de telle manière que les alvéoles de formage se forment chacune entre deux paires consécutives de blocs de formage latéraux en regard, lesdits blocs (7) étant montés coulissants deux à deux en regard sur une glissière transversale (42).

13. Dispositif selon ensemble les revendications 10 et 11 ou 12, **caractérisé en ce que** lesdits poussoirs (8) sont portés en console par des poutres (43) dont chacune est montée au-dessus d'une glissière (42) et fixée avec elle entre deux flasques latéraux (41) qui sont eux-mêmes fixés aux maillons de deux chaînes en parallèle (40) d'un arrangement en boucle sans fin (4).

14. Dispositif selon l'une des revendications 6, 8, 10, 12 et 13, **caractérisé en ce que** les poussoirs (6 ; 8) constituant les moyens de formage verticaux ont un supplément de course pour évacuer positivement les portions (P) desdites alvéoles de formage.

15. Dispositif selon l'une des revendications 5, 7, 9 ou 11, **caractérisé en ce que** lesdits blocs de formage (9) comportent dans leur face intérieure (9a) des évidements (91), la face (9a) présentant un léger chanfrein sur les côtés de chaque évidement (91), de sorte que chaque alvéole formée lorsque deux évidements (91) en vis-à-vis se rejoignent reste communicante de chaque côté avec un espace interstitiel.

16. Dispositif selon la revendication 11, ou ensemble les revendications 11 et 14, **caractérisé en ce que** lesdits blocs de formage (9) sont doubles, comportant chacun deux évidements (91) de chaque côté de leur fente de coulissement (92).

17. Dispositif selon la revendication 16, **caractérisé en ce que** chaque bloc (9) présente en surplomb d'un évidement (91) une partie de recouvrement (93), et au-dessus de son autre évidement une découpe définissant une surface externe (94) complémentaire de la surface interne (93a) de la partie de recouvrement (93) permettant un emboîtement avec contact glissant entre ces deux surfaces lors du rapprochement face à face de deux blocs (9).

18. Dispositif selon l'une des revendications 5, 7, 9, 11 et 15 à 17, **caractérisé en ce que** lesdits blocs de formage (9) comportent des évidements (91) et **en ce que** le fond de chaque évidement (91) est constitué par une coupelle (100) portée en bout de tiges coulissantes (101), les coupelles (100) ayant pour fonction de maintenir les boulettes formées en position centrée lors de l'ouverture des alvéoles de formage.

## Claims

1. Device for producing shaped portions of minced meat, such as minced meat steaks or meatballs, **characterised in that** it comprises:
- a mincing machine providing a stream of minced meat (V), said stream of minced meat having a size determined in function of the portions to be produced;
- conveying means with an endless belt (T), for transporting said stream of minced meat (V) exiting from said mincing machine,
and along said conveying means (T):
- means for cutting said stream of minced meat (V) into portions, and
- lateral shaping means (5, 7, 9) acting simultaneously on both sides of said stream of minced meat (V) to shape the contour of said portions (P).

2. Device according to claim 1, **characterised in that** said means for cutting into portions (P) of said stream of minced meat (V) are provided upstream said shaping means.

3. Device according to claim 2, **characterised in that** said cutting means consist of a passage for said stream of minced meat (V) formed by two endless belts with superposed transversal cleats (10a, 10b,), that approach each other vertically from upstream to downstream, in such a way that said cleats tighten progressively two by two on said stream of minced meat (V) by pinching it until it is cut.

4. Device according to any one of claims 1 to 3, **characterised in that** it furthermore comprises vertical shaping means (6, 8) co-operating with said lateral shaping means to give the portions (P) the thickness required.

5. Device according to any one of claims 1 to 4, **characterised in that** said lateral shaping means (5, 7, 9) are indented or recessed blocks advancing symmetrically on each side and immediately above a shaping transporting belt (11), being part of said conveying means (T) for said stream of minced meat (V) that, from upstream to downstream approach each other so as to touch to form shaping cavities with their indents or recesses and with said shaping transporting belt (11).

6. Device according to claims 4 and 5 in association, **characterised in that** said vertical shaping means are pushers (6, 8) arriving above said shaping transporting belt (11), between said lateral shaping blocks (5, 7), and which advance with them in a synchronised way.

7. Device according to claim 5, **characterised in that** said lateral shaping blocks (5) are mounted on the first and second endless loop arrangements (2A, 2B) set horizontally and symmetrically on either side of said shaping transporting belt (11).

8. Device according to claims 6 and 7 in association, **characterised in that** the pushers (6) co-operating with said lateral shaping blocks (5) are mounted on a third endless loop arrangement (2C) set above said shaping transporting belt (11) and between said first and second endless loop arrangements (2A, 2B), and advancing with them in a synchronised way.

9. Device according to claim 5, **characterised in that** said lateral shaping blocks (5, 7, 9) are mounted in a same endless loop arrangement (3) set above said shaping transporting belt (11), the endless loop arrangement (3) including two identical endless chains in parallel (30) carrying transversal runners (31, 42, 42') on which said lateral shaping blocks (5, 7, 9) are mounted in a sliding manner.

10. Device according to claims 6 and 9 in association, **characterised in that** said pushers (6, 8) are also mounted in the same endless loop arrangement (3) as said lateral shaping blocks (5, 7).

11. Device according to either one of claims 9 or 10, **characterised in that** said lateral shaping blocks (7, 9) include a slit (72, 92) in their lower wall, by which they are mounted in a sliding manner on their respective runner (42, 42'), the latter being a flat bar and proceeding to the cut-off of said stream of minced meat (V) into portions (P) .

12. Device according to claim 11, **characterised in that** said lateral shaping blocks (7) each have two indents (71) on either side of a central point (70), in such a way that the shaping cavities are each formed between two consecutive pairs of lateral shaping blocks facing each other, said blocks (7) being mounted in a sliding manner two by two opposite each other on a transversal runner (42).

13. Device according to claims 10 and 11 or 12 in association, **characterised in that** said pushers (8) are bracket-carried by beams (43) each of which being mounted above a runner (42) and fixed to it by lateral end plates (41) that are themselves fixed to the links of two chains in parallel (40) of an endless loop arrangement (4).

14. Device according to any one of claims 6, 8, 10, 12 and 13, **characterised in that** the pushers (6, 8) constituting the vertical shaping means have a supplementary run to evacuate the portions (P) positively from said shaping cavities.

15. Device according to any one of claims 5, 7, 9 or 11, **characterised in that** said shaping blocks (9) comprise recesses (91) in their internal face (9a), the face (9a) having a slight chamfer on the sides of each recess (91), in such a way that each cavity formed when two opposite recesses (91) come together remain communicating on each side with an interstitial space.

16. Device according to claim 11, or claims 11 and 14 in association, **characterised in that** said shaping blocks (9) are double, each including two recesses (91) on each side of their sliding slit (92).

17. Device according to claim 16, **characterised in that** each block (9) has, overhanging a recess (91), an overlap part (93), and above its other recess, a cutout defining an external surface (94) complementary to the internal surface (93a) of the overlap part (93), allowing interlocking sliding contact between these two surfaces when the two blocks (9) approach each other face to face.

18. Device according to any one of claims 5, 7, 9, 11 and 15 to 17, **characterised in that** said shaping blocks (9) include recesses (91) and **in that** the base of each recess (91) is constituted by a cup (100) set on the end of sliding struts (101), the cups (100) having the function of maintaining the formed meatballs in a centred position when the shaping cavities are opened.

## Patentansprüche

1. Vorrichtung zum Herstellen von in eine Form gebrachten Portionen von Hackfleisch, wie etwa Hacksteaks oder Frikadellen, **dadurch gekennzeichnet, daß** die Vorrichtung umfaßt:
einen Fleischwolf, der einen Strang von Hackfleisch (V) abgibt, wobei dieser Strang von Hackfleisch eine Dicke aufweist, die in Abhängigkeit der Portionen, die herzustellen sind, festgelegt ist;
eine Fördereinrichtung mit einem endlosen Band (T) zum Transportieren des genannten Strangs von Hackfleisch (V) am Ausgang des genannten Fleischwolfs;
und entlang der genannten Fördereinrichtung (T):
Mittel zum Schneiden des genannten Strangs von Hackfleisch (V) in Portionen; und
seitliche Mittel zum Ausformen (5, 7, 9), die gleichzeitig auf beide Seiten des genannten Strangs von Hackfleisch (V) wirken, um die Kontur der genannten Portionen (P) zu formen.

2. Vorrichtung nach Anspruch 1, **dadurch gekennzeichnet, daß** die genannten Mittel zum Schneiden in Portionen (P) des genannten Strangs von Hackfleisch (V) aufwärts der genannten Mittel zum Ausformen angeordnet sind.

3. Vorrichtung nach Anspruch 2, **dadurch gekennzeichnet, daß** die genannten Mittel zum Schneiden aus einem Durchgang für den genannten Strang von Hackfleisch (V) bestehen, der aus zwei endlosen Bändern mit in Querrichtung übereinander angeordneten Formelementen (10a, 10b) gebildet ist, die sich in vertikaler Richtung von aufwärts nach abwärts einander annähern, so daß die genannten Formelemente sich progressiv auf den genannten Strang von Hackfleisch (V) zusammenbewegen, wobei dieser gequetscht wird, bis er abgetrennt wird.

4. Vorrichtung nach einem der Ansprüche 1 bis 3, **dadurch gekennzeichnet, daß** sie weiterhin vertikale Mittel zur Ausformung (6, 8) aufweist, die mit den genannten seitlichen Mitteln zur Ausformung zusammenwirken, um den Portionen (P) die gewünschte Dicke zu geben.

5. Vorrichtung nach einem der Ansprüche 1 bis 4, **dadurch gekennzeichnet, daß** die genannten seitlichen Mittel zur Ausformung (5, 7, 9) ausgeschnittene oder ausgesparte Blöcke sind, die symmetrisch auf beiden Seiten und unmittelbar oberhalb eines Transportbands zur Ausformung (11) vorbeilaufen, wobei dieses einen Teil der genannten Fördereinrichtung (T) für den Strang von Hackfleisch (V) bildet, wobei sie sich von aufwärts nach abwärts einander annähern, bis sie sich berühren, um durch ihre Ausschnitte oder Aussparungen und mit dem genannten Transportband zur Ausformung (11) Zellen zur Ausformung bilden.

6. Vorrichtung gemäß Anspruch 4 und 5, **dadurch gekennzeichnet, daß** die genannten vertikalen Mittel zur Ausformung Stößel (6, 8) sind, die sich oberhalb des genannten Transportbands zur Ausformung (11) befinden, zwischen den genannten seitlichen Blökken zur Ausformung (5, 7), und die synchron mit diesen verlaufen.

7. Vorrichtung nach Anspruch 5, **dadurch gekennzeichnet, daß** die genannten seitlichen Blöcke zur Ausformung (5) auf einer ersten und zweiten Anordnung in Form einer endlosen Schleife (2a, 2b) angeordnet sind, die horizontal und symmetrisch auf beiden Seiten des genannten Transportbands zur Ausformung (11) angeordnet sind.

8. Vorrichtung nach Anspruch 6 und 7, **dadurch gekennzeichnet, daß** die Stößel (6), die mit den genannten seitlichen Blöcken zur Ausformung (5) zusammenwirken, auf einer dritten Anordnung in Form einer endlosen Schleife (2c) gehalten sind, die oberhalb des genannten Transportbands zur Ausformung (11) und zwischen der genannten ersten und zweiten Anordnung in Form einer endlosen Schleife (2a, 2b) angeordnet ist, und die sich synchron mit diesen bewegt.

9. Vorrichtung nach Anspruch 5, **dadurch gekennzeichnet, daß** die genannten seitlichen Blöcke zur Ausformung (5, 7, 9) in einer gleichen Anordnung in Form einer endlosen Schleife (3) angebracht sind, die oberhalb des genannten Transportbands zur Ausformung (11) angeordnet ist, wobei die genannte Anordnung in Form einer endlosen Schleife (3) zwei gleiche seitliche und parallel angeordnete endlose Ketten (30) umfaßt, die seitliche Gleitschienen (31, 42, 42') tragen, auf denen die genannten seitlichen Blöcke zur Ausformung (5, 7, 9) verschiebbar gehalten sind.

10. Vorrichtung nach Anspruch 6 und 9, **dadurch gekennzeichnet, daß** die genannten Stößel (6, 8) ebenfalls in der gleichen Anordnung in Form einer endlosen Schleife (3) wie die genannten seitlichen Blöcke zur Ausformung (5, 7) gehalten sind.

11. Vorrichtung nach Anspruch 9 oder 10, **dadurch gekennzeichnet, daß** die genannten seitlichen Blöcke zur Ausformung (7, 9) in ihrer unteren Wand einen Schlitz (72, 92) tragen, mit dem sie verschieblich auf ihrer entsprechenden Gleitschiene (42, 42') gehalten sind, wobei diese eine ebene Stange ist, und den Schnitt des genannten Strangs von Hackfleisch (V) in Portionen (P) vornehmen.

12. Vorrichtung nach Anspruch 11, **dadurch gekennzeichnet, daß** die genannten seitlichen Blöcke zur Ausformung (7) jeweils zwei Ausschnitte (71) auf jeder Seite von einer zentralen Spitze (70) aufweisen, so daß sich die Zellen zur Ausformung jeweils zwischen zwei aufeinanderfolgenden Paaren von einander gegenüberstehenden seitlichen Blöcken zur Ausformung bilden, wobei die genannten Blöcke (7) paarweise verschieblich einander gegenüberstehend auf einer in Querrichtung angeordneten Gleitschiene (42) gehalten sind.

13. Vorrichtung nach den Ansprüchen 10 und 11 oder 12, **dadurch gekennzeichnet, daß** die genannten Stößel (8) tragarmartig auf Trägern (43) gehalten sind, von denen jeder oberhalb einer Gleitschiene (42) angebracht und mit dieser zwischen zwei seitlichen Flanschen (41) befestigt ist, die ihrerseits an den Gliedern der beiden parallel angeordneten Ketten (40) einer Anordnung in Form einer endlosen Schleife (4) befestigt sind.

14. Anordnung nach einem der Ansprüche 6, 8, 10, 12 und 13, **dadurch gekennzeichnet, daß** die Stößel (6, 8), die die vertikalen Mittel zur Ausformung bilden, einen zusätzlichen Hub aufweisen, um die Portionen (P) zwangsläufig aus den genannten Zellen zur Ausformung herauszubewegen.

15. Vorrichtung nach einem der Ansprüche 5, 7, 9 oder 11, **dadurch gekennzeichnet, daß** die genannten Blöcke zur Ausformung (9) in ihrer Innenseite (9a) Aussparungen (91) aufweisen, wobei die Seite (9a) eine leichte Anschrägung auf den Seiten einer jeden Aussparung (91) aufweist, so daß jede Zelle, die gebildet wird, wenn zwei einander gegenüberliegende Aussparungen (91) zusammentreffen, auf jeder Seite mit einem Zwischenraum in Verbindung bleibt.

16. Vorrichtung nach Anspruch 11 oder nach den Ansprüchen 11 und 14, **dadurch gekennzeichnet, daß** die genannten Blöcke zur Ausformung (9) doppelt ausgebildet sind und jeweils zwei Aussparungen (91) auf jeder Seite ihres Gleitschlitzes (92) aufweisen.

17. Vorrichtung nach Anspruch 16, **dadurch gekennzeichnet, daß** jeder Block (9), überhängend über eine Aussparung (91), einen übergreifenden Abschnitt (93) aufweist, und oberhalb seiner anderen Aussparung einen Ausschnitt, der eine äußere Oberfläche (94) bildet, die komplementär zu der inneren Oberfläche (93a) des übergreifenden Abschnitts (93) ist, so daß ein Ineinandergreifen mit gleitendem Kontakt zwischen diesen beiden Oberflächen möglich ist, wenn sich die beiden Blöcke (9) einander gegenüberliegend aneinander annähern.

18. Vorrichtung nach einem der Ansprüche 5, 7, 9, 11 und 15 bis 17, **dadurch gekennzeichnet, daß** die genannten Blöcke zur Ausformung (9) mit Aussparungen (91) versehen sind, wobei der Boden einer jeden Aussparung (91) durch eine Schale (100) gebildet ist, die am Ende von verschieblichen Stangen (101) gehalten ist, wobei die Schalen (100) die Funktion haben, die geformten Frikadellen bei der Öffnung der Ausformungszellen in einer zentrierten Position zu halten.
